Europäisches Patentamt

European Patent Office

Office européen des brevets

(11) Veröffentlichungsnummer: **0 282 086**

**A2**

(12) # EUROPÄISCHE PATENTANMELDUNG

(21) Anmeldenummer: 88103910.1

(22) Anmeldetag: 11.03.88

(51) Int. Cl.⁴: **G02B 5/08** , G02B 5/30

(30) Priorität: 12.03.87 DE 3707984

(43) Veröffentlichungstag der Anmeldung:
14.09.88 Patentblatt 88/37

(84) Benannte Vertragsstaaten:
DE FR GB IT SE

(71) Anmelder: **Max-Planck-Gesellschaft zur Förderung der Wissenschaften e.V.
Bunsenstrasse 10
D-3400 Göttingen(DE)**

(72) Erfinder: **Keilmann, Fritz, Dr.
Hagelsbrunnen 5a·
D-7000 Stuttgart 80(DE)**

(74) Vertreter: **von Bezold, Dieter, Dr. et al
Dr. Dieter von Bezold Dipl.-Ing. Peter Schütz
Dipl.-Ing. Wolfgang Heusler Brienner Strasse 52
D-8000 München 2(DE)**

(54) Polarisierender Spiegel für Optische Strahlung.

(57) Es wird ein polarisierender Spiegel für optische Strahlung in einem Wellenlängenbereich vom Ultraviolett bis ins Infrarot, beschrieben, der eine reflektierende metallische Oberfläche hat, welche ein Reliefmuster aus Erhebungen (14) und Vertiefungen (16) aufweist, die zumindest in gewissen Bereichen der Oberfläche ein periodisches Muster bilden, wobei die effektive Breite (b) der Vertiefungen (16) etwa gleich einer halben Wellenlänge der Strahlung oder kleiner ist. Gemäß einer ersten Ausführungsform haben die Erhebungen (14) eine Breite (a), die groß im Vergleich zur Breite (b) der Vertiefungen (16) und groß im Vergleich zur Wellenlänge ist. Gemäß einer zweiten Ausführungsform ist die Summe aus den Breiten (a, b) einer Erhebung (14) und einer benachbarten Vertiefung (16) kleiner als die Wellenlänge und größer als die halbe Wellenlänge der Strahlung.

## Polarisierender Spiegel für optische Strahlung

Die vorliegende Erfindung betrifft einen polarisierenden Metallspiegel für Laserstrahlung im Wellenlängenbereich vom Ultraviolett bis ins Infrarot, z. B. bis 200 μm.

Zur Polarisation von optischer Strahlung im Wellenlängenbereich vom Ultraviolett bis ins Infrarot sind zahlreiche Polarisationsvorrichtungen bekannt, die zum größten Teil aus dielektrischen Materialien, Folien oder Beschichtungen bestehen. Für Laserstrahlung hoher Leistung sind solche Polarisationsvorrichtungen ungeeignet, da ihre Belastbarkeit nicht ausreicht.

Aus OPTICS COMMUNICATIONS **19**, Nr. 1 October 1976, S. 76 - 78 sind theoretische Untersuchungen eines als Polarisator wirkenden Metallspiegels bekannt, dessen Oberfläche ein rechteckwellenförmiges Profil mit abwechselnden parallelen Erhebungen und Vertiefungen aufweist. Es werden Einfallswinkel der Strahlung von 40 bis 60 Grad und Verhältnisse von Vertiefungsbreite zu Periodenbreite (Summe der Breiten einer Vertiefung und einer Erhöhung) von 0,45 bis 0,55 untersucht.

Aus US-A-4,009,933 ist ein polarisierender Laserreflektor bekannt, der ein optisch transparentes Substrat, ein auf diesem angeordnetes Muster aus parallelen, Streifen aus Gold und hierauf eine reflektierende dielektrische Mehrschichtstruktur enthält. Die Periodenbreite der Streifen ist kleiner als eine halbe Wellenlänge der Strahlung.

Der vorliegenden Erfindung löst die Aufgabe, einen polarisierenden Spiegel für Laserstrahlung u. dgl. zu schäffen, der hoch belastbar ist und neue überraschende Eigenschaften hat und neue Anwendungen ermöglicht.

Die Erfindung geht aus von einem polarisierenden Spiegel für optische Stahlung in einem Wellenlängenbereich vom Ultraviolett bis ins Infrarot, mit einer reflektierenden metallischen Oberfläche, die ein Reliefmuster aus Erhebungen und Vertiefungen aufweist, die zumindest in gewissen Bereichen der Oberfläche ein periodisches Muster bilden, wobei die effektive Breite der Vertiefungen etwa gleich einer halben Wellenlänge λ der Strahlung oder kleiner ist.

Gemäß einem ersten Aspekt der Erfindung haben die Erhebungen eine Breite, die groß im Vergleich zur Breite der Vertiefungen (z. B. mindestens zehnmal so groß) und groß im Vergleich zur Wellenlänge (z. B. mindestens fünfmal so groß) ist. Bevorzugte Verhältnisse für einen Laserresonatorspiegel sind etwa a/b = 30 und a/λ = 10.

Von dem in OPTICS COMMUMICATIONS (l. c.) diskutierten Polarisator unterscheidet sich diese Ausführungsform der Erfindung darin, daß dort nur Strukturen mit ungefähr gleich breiten Erhöhungen und Vertiefungen diskutiert werden und zudem nur Wellenlängen erwähnt werden, die ungefähr gleich der Periode, d. h. der Summe der Breiten der Erhöhungen und Vertiefungen sind, wo der Reflektionsgrad $R_p$ in die nullte Ordnung für die den Vertiefungen parallele Komponente der Strahlung größer als 0,75 und $R_s$ (Reflexionsgrad in die nullte Ordnung für die senkrechte Komponente) kleiner als 0,25 sind. Der jeweils fehlende Strahlungsanteil wird in die 1. Ordnung gebeugt, weitere Ordnungen treten im bekannten Falle nicht auf. Bei der oben erwähnten Ausführungsform treten dagegen viele Beugungsordnungen auf und wegen der angegebenen Bedingungen ergibt sich für die nullte Ordnung $R_p$ fast gleich 1 und $R_s = 1 - \delta$, mit $\delta < < 1$. Dies ist überraschend und aus der obigen Veröffentlichung nicht ableitbar. In der Praxis wird man $\delta$ zwischen 0,05 und 0,10 wählen, dann sind die Verluste bei der s-Polarisation etwa 5 bis 10% während die Anteile mit p-Polarisation voll reflektiert werden.

Der in der US-A-4,009,933 beschriebene Polarisator unterscheidet sich von der obigen Ausführungsform der Erfindung dadurch wesentlich, daß bei ihm die Periode des Streifenmusters kleiner als die halbe Wellenlänge ist und daß die Breite der Streifen und Zwischenräume gleich ist.

Gemäß einem zweiten Aspekt der Erfindung ist die Summe a+b aus den Breiten einer Erhebung und einer benachbarten Vertiefung kleiner als die Wellenlänge und größer als die halbe Wellenlänge der Strahlung. Das wesentliche an dieser Bedingung ist, daß nur die nullte Beugungsordnung auftritt, daß also das einfallende Strahlungsbündel nicht in zwei oder mehrere aufgespalten wird. Arbeitet man mit schrägem Einfall, so läßt sich erreichen, daß nur die 0. Ordnung auftritt, wenn man die beiden genannten Grenzen ($\lambda$ /2 < a+b < $\lambda$ ) verkleinert und zwar je nach Einfallswinkel um bis zum Faktor 2.

Der in der Veröffentlichung OPTICS COMMUNICATION (l. c.) diskutierte Polarisator unterscheidet sich von dieser zweiten Ausführungsform der Erfindung dadurch, daß dort mit solchen Einfallswinkeln gearbeitet wird, daß stets auch eine 1. Beugungsordnung auftritt, die den der nullten Beugungsordnung fehlenden Strahlungsanteil aufnimmt.

Von dem in der US-A-4,009,933 beschriebenen Polarisator unterscheidet sich die zweite Ausführungsform der Erfindung dadurch, daß bei ihr die reflektierende Fläche ein Reliefmuster bildet, bei dem sowohl die erhöhten als auch die vertieften Bereiche metallisch reflektieren, daß die Summe der Breiten einer Erhöhung und einer Vertiefung größer als die halbe Wellenlänge ist und weiterhin durch die Erkenntnis, daß die beiden Polarisationsanteile mit verschiedenen Phasen reflektiert werden, was eine ganze Reihe neuer Anwendungen ermöglicht, wie Verwendung des Spiegels als Laserresonator mit zwei orthogonal polarisierten Moden und einstellbarer Frequenzdifferenz, als elliptisch/zirkularer Polarisator (Isolator, Phasenschieber, Abschwächer, Modulator, Kompensator, Polarisationsrotator) und zum Fokussieren, Strahlteilen usw mit einem planaren Element.

Der polarisierende Metallspiegel gemäß der Erfindung entfaltet also eine effektive Polarisationswirkung auch bei senkrechtem oder nahezu senkrechtem Einfall der zu polarisierenden Strahlung und hält auch sehr hohen Strahlungsleistungen stand. Er kann daher z. B. in einem Grundmoden-Laseroszillator als Resonatorspiegel verwendet werden, um eine Polarisationsentartung zu verhindern.

Je nach Polarisation tritt dann die Laserresonanz bei verschiedenen Abstimmlängen ein; bei hinreichender Bandbreite der Verstärkung ist eine simultane Emission zweier orthogonal polarisierter Strahlen möglich, deren Frequenzdifferenz durch die Phasenverzögerung des Spiegels bestimmt wird.

Eine weitere vorteilhafte Anwendung ist die Umwandlung eines linear polarisierten Strahles in einen zirkular polarisierten oder umgekehrt.

Der vorliegende Spiegel kann eine gekrümmte Oberfläche haben und dann z. B. die beiden Funktionen Zirkularpolarisator und Fokussierspiegel vereinigen. In Verbindung mit einem Linearpolarisator erhält man einen hochbelastbaren Isolator zur Unterdrückung unerwünschter Strahlung, z B. Strahlung, die von einem Werkstück reflektiert wird.

Bei drehbarer Anordnung des Spiegels, insbesondere um die zur Spiegelebene senkrechte z-Achse oder eine hierzu senkrechte, in der Spiegelebene liegende x-Achse, in Kombination mit weiteren Elementen, wie Linearpolarisatoren, erhält man einen kontinuierlich variablen polarisationserhaltenden Phasenschieber, einen Abschwächer bzw. Modulator, einen Kompensator für elliptische Polarisation oder einen Rotator für lineare Polarisation.

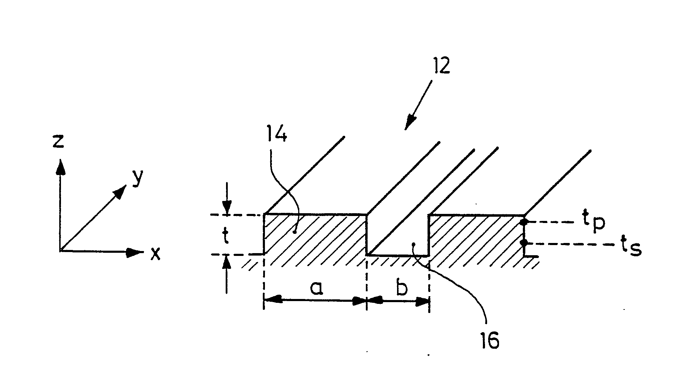

Im folgenden werden Ausführungsbeispiele der Erfindung unter Bezugnahme auf die Zeichnung näher erläutert, welche eine isometrische stark vergrößerte Schnittansicht eines polarisierenden Metallspiegels gemäß einer bevorzugten Ausführungsform der Erfindung darstellt.

Der vorliegende polarisierende Spiegel kann ganz aus Metall bestehen oder eine auf einem nichtmetallischen Substrat, wie Keramik, Quarz und dergl. angeordnete, die reflektierende Oberfläche bildende Metallschicht enthalten, die eine für die geforderte Belastbarkeit ausreichende Dicke (z. B. 0,5 bis 1 μm und mehr) hat.

Bei dem vorliegenden polarisierenden Spiegel ist die reflektierende metallische Oberfläche durch ein Reliefmuster aus langgestreckten, leistenartigen Erhebungen (14), die paarweise durch Vertiefungen (16) getrennt sind, strukturiert. Bei dem dargestellten Ausführungsbeispiel sind die Erhebungen (14) gerade und parallel zueinander und das Reliefmuster hat ein rechteckwellenförmiges Profil. Die Erhebungen (14) und Vertiefungen (16) brauchen jedoch nur in der Größenordnung der Wellenlänge der Strahlung, für die der polarisierende Spiegel vorgesehen ist, geradlinig und parallel zueinander verlaufen. Makroskopisch gesehen können die Erhebungen und Vertiefungen auch gekrümmt sein, z. B. konzentrische Kreise, Ellipsen, Hyperbeln und dergl., die in im wesentlichen gleichen Abständen voneinander verlaufen, haben. Es können auch andere Profilformen, z. B. sägezahnartige Profile, Dreieckprofile, Sinusprofile und dergl. verwendet werden, um dem polarisierenden Spiegel spezielle Eigenschaften zu verleihen.

Im folgenden wird die Erfindung der Einfachheit halber unter Bezugnahme auf das in der Zeichnung dargestellte Ausführungsbeispiel mit den parallelen geradlinigen Erhebungen und Vertiefungen erläutert.

Wenn bei dem dargestellten polarisierenden Metallspiegel die (effektive) Breite (b) der Vertiefungen (16) kleiner als die Hälfte der Wellenlänge einer aus der Richtung +z einfallenden Strahlung gewählt wird, so kann die Komponente $E_s$, deren elektrischer Vektor E senkrecht zu Längsrichtung der Vertiefungen (16), also senkrecht zur y-Richtung polarisiert ist, tiefer in die Vertiefungen (16) eindringen, als die Komponente, deren elektrischer Vektor parallel zur y-Richtung gerichtet ist. Man kann die Vertiefung (16) nämlich als einen Hohlleiter mit parallelen, elektrisch leitenden Wänden ansehen, die die parallel zur y-Richtung verlaufende elektrische Komponente der Strahlung kurzschließen. Die Komponente ($E_p$) kann nicht in die Vertiefung (16) eindringen. Bei den dargestellten polarisierenden Spiegeln erfolgt die Reflexion also je nach Polarisation in verschiedenen Ebenen z = $t_p$, $t_s$ mit $t_p > t_s$.t ist der in z-Richtung gerechnete Abstand vom Boden der Vertiefungen (16); die Oberflächen der Erhebungen (14) haben also die Koordinate z = t.

Bei einem ersten Typ des vorliegenden polarisierenden Spiegels wird a > > b und a > > λ gewählt. Die effektive Breite (b) der Vertiefungen ist nach wie vor kleiner als die Hälfte der Wellenlänge der einfallenden Strahlung, wie oben erläutert worden ist. Die Reliefstruktur aus den Erhebungen (14) und den Vertiefungen (16) wirkt dabei für $E_p$ und $E_s$ (jeweils bezogen auf die y-Richtung) in unterschiedlicher Weise als Beugungsgitter, das viele gebeugte Ordnungen liefert. Für $E_p$ sind die Beugungseffekte und damit auch die Verluste durch Strahlung, die aus dem Strahlengang herausgebeugt wird, vernachlässigbar gering, da $t_p$ ungefähr gleich t ist, und die Reliefstruktur daher für $E_p$ praktisch wie ein ebener Spiegel wirkt, so daß die reflektierte Wellenfront kaum gestört ist. Für $E_s$ (also für die Komponente, deren elektrischer Vektor senkrecht zur y-Richtung - schwingt) treten erhebliche Beugungseffekte und damit Beugungsverluste auf, die dadurch besonders groß gemacht werden können, daß man die Tiefe (t) der Vertiefungen (16) gleich einer 1/4 Wellenlänge macht und damit die Wellenfront maximal stört. Ein Metallspiegel dieses Typs stellt also einen nahezu verlustfreien, hochbelastbaren, linear polarisierenden Spiegel dar, der z. B. als Resonatorspiegel dienen kann. Der Unterdrückungsfaktor dieses Spiegels für die unerwünschte Polarisationskomponente ($E_s$) kann durch die Wahl der Parameter (a, b) und (t) sowie der Profilform optimal an die Strahlung angepaßt werden, mit der er verwendet werden soll.

Bei einem zweiten Typ des vorliegenden reflektierenden Metallspiegels wird die Summe (a+b) kleiner als die Wellenlänge und größer als die halbe Wellenlänge der einfallenden Strahlung gewählt, so daß außer dem reflektierten Strahl keine Beugungsordnung auftritt. Die Form der Wellenfront (z. B. eben) bleibt daher bei der Spiegelung erhalten, und bei der Spiegelung entsteht eine Phasenverschiebung $\phi$ zwischen den Komponenten ($E_p$) und ($E_s$), die mit t anwächst und durch die Wahl von a, b sowie gegebenenfalls der Profilform auf spezifische Werte eingestellt werden kann. Es ist dabei nicht nötig, daß a viel kleiner als b sein muß, was in dem hier interessierenden infraroten und sichtbaren Spektralbereich eine aus Gründen der Festigkeit und Haltbarkeit nicht zu realisierenden Einschränkung bedeuten würde. In der Praxis kann man durchaus a etwa gleich b wählen.

Polarisierende Teilspiegel dieses Typs kann man als Laserresonator-Spiegel verwenden, z. B. um die Polarisationsentartung eines Grundmoden-Laseroszillators zu unterdrücken. Je nach Polarisation tritt die Laserresonanz bei verschiedenen Abstimmlängen ein. Bei hinreichender Bandbreite der Verstärkung ist eine simultane Emission zweier orthogonal polarisierter Laserstrahlen möglich, deren Frequenzdifferenz durch die Verzögerung bzw. Phasenverschiebung $\phi$, die der Spiegels zwischen den beiden Polarisationsrichtungen erzeugt, bestimmt wird.

Eine weitere Anwendung ist die Polarisation eines Lichtstrahls. Ein in der Praxis wichtiger Fall ist $\phi = 90°$, also die Umwandlung eines linear polarisierten Strahls in einen zirkular polarisierten Strahl oder umgekehrt. Die Phasenverschiebung $\phi$ kann durch Variation des Einfallswinkels, etwa durch Drehung des Spiegels um die x-Achse, kontinuierlich abgestimmt werden. Zu beachten ist, daß die Grenzbedingung (a+b) < λ nur für senkrechten Einfall gilt. Bei schrägem Einfall, z. B. in der z-y-Ebene ist (a+b) durch (a+b)(1-sinα) zu ersetzen.

Die Erfindung ist nicht auf ebene Spiegel mit Reliefmuster beschränkt, sondern läßt sich auch bei gekrümmten metallischen Oberflächen anwenden. Dadurch lassen sich z. B. in einem einzigen optischen Element die beiden Funktionen Zirkularpolarisator und Fokussierspiegel vereinigen. In Verbindung mit einem Linearpolarisator erhält man einen hochbelastbaren Isolator zur Unterdrückung von z. B. von einem Werkstück reflektierter Strahlung.

Für die beiden oben diskutierten Typen gilt die anfangs eingeführte Bedingung b < λ/2 nicht streng. Sie stellt lediglich die Grenze dar, innerhalb derer sich das Beugungsproblem durch die Betrachtung des Sperr-Verhaltens eines metallischen Hohlleiters darstellen läßt. Im Grunde aber wird jedes beliebige Profil zumindest leicht polarisierend. Die polarisierende Wirkung bleibt auch dann noch sehr hoch, wenn die Sperr-Bedingung (Cutoff-Bedingung) nur knapp überschritten wird, d.h. (b) etwas größer als die halbe Wellenlänge ist.

Es sei weiterhin noch erwähnt, daß die Strukturparameter (a, b und t) und/oder die Profilform und damit $\phi$ über die Spiegelfläche variieren können. Damit lassen sich in einem planaren Element Funktionen wie Fokussieren, Strahlteilung usw. realisieren.

Anstelle der in der Zeichnung dargestellten und oben erläuterten Reliefstruktur aus langgestreckten geradlinigen Erhebungen und Vertiefungen können auch andere Reliefstrukturen verwendet werden solange die Erhebungen und Vertiefungen in der Größenordnung der Wellenlänge betrachtet gerade sind, also solange der Krümmungsradius sehr groß gegen die Wellenlänge ist. Durch ein System von kreisförmigen Erhebungen und Vertiefungen läßt sich beispielsweise eine bezüglich der optischen Achse tangentiale Polarisation eines Strahlungsbündels erzeugen. In entsprechender Weise können die Erhebungen und Vertiefungen auch die Form von im wesentlichen gleich beabstandeten Ellipsen, Parabeln, Hyperbeln oder anderen Kurven haben.

Bei Verwendung eines $CO_2$ Lasers mit einer Emissionswellenlänge von 10,6 μm können im Falle eines zirkular polarisierenden 90°-Umlenkspiegels a=b=4 μm und t=2 μm gewählt werden. Eine Feinabstimmung der Polarisationswirkung ist durch Variation des Einfallswinkels der Strahlung und durch Drehung des Spiegels um die zur Spiegelfläche senkrechte z-Achse möglich.

## Ansprüche

1. Polarisierender Spiegel für optische Strahlung in einem Wellenlängenbereich vom Ultraviolett bis ins Infrarot, mit einer reflektierenden metallischen Oberfläche, die ein Reliefmuster aus Erhebungen (14) und Vertiefungen (16) aufweist, die zumindest in gewissen Bereichen der Oberfläche ein periodisches Muster bilden, wobei die effektive Breite (b) der Vertiefungen (16) etwa gleich einer halben Wellenlänge der Strahlung oder kleiner ist, **dadurch gekennzeichnet,** daß die Erhebungen (14) eine Breite (a) haben, die groß im Vergleich zur Breite (b) der Vertiefungen (16) und groß im Vergleich zur Wellenlänge ist.

2. Spiegel für optische Strahlung in einem Wellenlängenbereich vom Ultraviolett bis ins Infrarot, mit einer reflektierenden metallischen Oberfläche, die ein Reliefmuster aus Erhebungen (14) und Vertiefungen (16) aufweist, die zumindest in gewissen Bereichen der Oberfäche ein periodisches Muster bilden, wobei die effektive Breite (b) der Vertiefungen (16) etwa gleich einer halben Wellenlänge der Strahlung oder kleiner sind, **dadurch gekennzeichnet,** daß die Summe aus den Breiten (a, b) einer Erhebung (14) und einer benachbarten Vertiefung (16) kleiner als die Wellenlänge der Strahlung und größer als die halbe Wellenlänge der Strahlung ist.

3. Spiegel nach Anspruch 2, **dadurch gekennzeichnet,** daß er derart in einem Strahlengang der Strahlung angeordnet ist, daß nur die nullte Ordnung der Strahlung entstehen kann.

4. Spiegel nach Anspruch 1, 2 oder 3, **dadurch gekennzeichnet,** daß die Tiefe (t) der Vertiefungen (16) ungefähr gleich einer Viertel-Wellenlänge ist.

5. Spiegel nach einem der vorhergehenden Ansprüche, **dadurch gekennzeichnet,** daß sich mindestens einer der Strukturparameter Breite (a) der Erhebungen (14), Breite (b) der Vertiefungen (16), Tiefe (t) der Vertiefungen (16) und Profilform über die Oberfläche des Spiegels ändert.